(19) Europäisches Patentamt
European Patent Office
Office européen des brevets

(11) **EP 3 157 258 B1**

(12) **EUROPEAN PATENT SPECIFICATION**

(45) Date of publication and mention
of the grant of the patent:
**05.08.2020 Bulletin 2020/32**

(51) Int Cl.:
*H04N 19/119* (2014.01)     *H04N 19/96* (2014.01)
*H04N 19/176* (2014.01)     *H04N 19/147* (2014.01)
*H04N 19/70* (2014.01)

(21) Application number: **15807089.6**

(22) Date of filing: **11.06.2015**

(86) International application number:
**PCT/KR2015/005873**

(87) International publication number:
**WO 2015/190839 (17.12.2015 Gazette 2015/50)**

(54) **METHOD AND DEVICE FOR ENCODING AND DECODING VIDEO SIGNAL BY USING EMBEDDED BLOCK PARTITIONING**

VERFAHREN UND VORRICHTUNG ZUR CODIERUNG UND DECODIERUNG EINES VIDEOSIGNALS UNTER VERWENDUNG VON EINGEBETTETER BLOCKPARTITIONIERUNG

PROCÉDÉ ET DISPOSITIF POUR ENCODER ET DÉCODER UN SIGNAL VIDÉO EN UTILISANT UN PARTITIONNEMENT DE BLOC INTÉGRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2014 US 201462010985 P**

(43) Date of publication of application:
**19.04.2017 Bulletin 2017/16**

(73) Proprietor: **LG Electronics Inc.**
**Seoul 150-721 (KR)**

(72) Inventor: **RUSANOVSKYY, Dmytro**
**Santa Clara, California 95054 (US)**

(74) Representative: **Diehl & Partner**
**Patent- und Rechtsanwaltskanzlei mbB**
**Erika-Mann-Straße 9**
**80636 München (DE)**

(56) References cited:
**JP-A- 2012 080 213     US-A1- 2008 025 390**
**US-A1- 2011 310 976**

• ZHENG (HISILICON) X ET AL: "TE3: Huawei & Hisilicon report on flexible motion partitioning coding", 2. JCT-VC MEETING; 21-7-2010 - 28-7-2010; GENEVA; (JOINT COLLABORATIVETEAM ON VIDEO CODING OF ISO/IEC JTC1/SC29/WG11 AND ITU-T SG.16 ); URL:HTTP://WFTP3.ITU.INT/AV-ARCH/JCTVC-SITE/,, no. JCTVC-B041, 23 July 2010 (2010-07-23), XP030007621,
• CHANG H-H ET AL: "EDGE-BASED MOTION ESTIMATION AND REGION-BASED CONTOUR TRACING FOR VERY LOW BIT RATE VIDEO CODING", JOURNAL OF ELECTRONIC IMAGING, SPIE-INTERNATIONAL SOCIETY FOR OPTICAL ENGINEERING, US, vol. 7, no. 1, 1 January 1998 (1998-01-01) , pages 127-135, XP000732633, ISSN: 1017-9909, DOI: 10.1117/1.482634
• YI-WEN CHEN ET AL: "Parametric OBMC for Pixel-Adaptive Temporal Prediction on Irregular Motion Sampling Grids", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 22, no. 1, 1 January 2012 (2012-01-01), pages 113-127, XP011391551, ISSN: 1051-8215, DOI: 10.1109/TCSVT.2011.2158341
• X.-W. YIN ET AL.: 'Prediction and adaptive scanning in block-set wavelet image coder' IEE PROCEEDINGS - VISION, IMAGE AND SIGNAL PROCESSING vol. 153, no. 2, April 2006, pages 1 - 31, XP006026159

**(Cont. next page)**

**EP 3 157 258 B1**
- TOMOYUKI YAMAMOTO ET AL.: 'AHG 13: SUB-REGION EXTRACTION - POSITION CALCULATION AND COMPARISON OF DIFFERENTAPPROACHES' JCT-VC 17TH MEETING 29 March 2014, VALENCIA, ES, pages 1 - 7, XP030116099

**Description**

[Technical Field]

The present invention relates to a method and an apparatus for encoding and decoding a video signal based on embedded block partitioning, and more particularly, to a quadtree (QT) decomposition with embedded block partitioning.

[Background Art]

Compression coding means a series of signal processing technologies for sending digitalized information through a communication line or storing digitalized information in a form suitable for a storage medium. Media, such as video, an image, and voice, may be the subject of compression coding. In particular, a technology for performing compression coding on video is called video compression.

The next-generation video content expects to feature high spatial resolution, a high frame rate, and high dimensionality of a video scene representation. The processing of such content would require a significant increase in memory storage, a memory access rate, and processing power.

Accordingly, it is desirable to design a coding tool which address these foreseen challenges and offer some solutions. In particular, the quadtree (hereinafter, 'QT') partitioning recently became utilized in mainstream video coding algorithm solutions. Initially it was proposed for adaptive inloop filtering and adaptive in-loop interpolation, and later became a core of High Efficiency Video Coding (hereinafter, 'HEVC') block partitioning and signaling scheme. HEVC utilizes two independent QT decompositions, one for prediction, so called prediction QT and another for application of block transforms, so called transform QT. Despite its power in allowing flexible partitioning and efficient split signaling, it also can be considered as sub-optimal in terms of spatially non-uniform content representation and motion modeling in video signal.

A typical QT representation is limited to capturing horizontal and vertical edge discontinuities at dyadic locations within the block. Therefore, if split is required in a non-dyadic location, or if split is required in non-horizontal and non-vertical directions, the QT decomposition would proceed to smaller blocks to achieve higher accuracy of representation, when presumably each leaf cover a smooth image region without discontinuities with a single motion model.

In some circumstances, QT decomposition and signaling may become sub-optimal for spatial and motion model represented by tree and this would lead to increase in number of decomposition and increase in signaling bit overhead. Especially, this situation may be common with proceeding to large LCU (Largest Coding Unit) sizes in HEVC design.

Accordingly, it is necessary to utilize the QT decomposition with geometrical modeling and to adjust the QT decomposition to edges located in non-dyadic spatial locations.

Features of the preambles of the independent claims are known from both document "TE3: Huawei & Hisilicon report on flexible motion partitioning coding" that was submitted under the document number JCTVC-B041 of the Joint Collaborative Team on Video Coding (JCTVC) of ITU-T SG16 WP3 and ISO/IEC JTCI/SC29/WG11 and article "Edge-based motion estimation and region-based contour tracing for very low bit rate video coding" of Her-Hsiung Chang and Long Wen Chang (Journal of Electronic Imaging 7(1), 127- 135 (January 1998))

[Disclosure]

[Technical Problem]

An object of the present invention is to propose a method for enabling a coding tool for high efficiency compression to be designed and reducing required computation resources.

Another object of the present invention is to allow more compact comparing to a full QT decomposition representation and modeling of some types of image and video signals.

Another object of the present invention is to improve compression efficiency of video coding systems utilizing QT decomposition.

Another object of the present invention is to reduce the computational complexity and memory requirements by using less number of QT decomposition levels for processing and/or coding of some types of image and video signals.

Another object of the present invention is to reduce the redundant decomposition for common natural content and significant bit overhead for signaling of QT decomposition and signaling of motion and geometrical models.

Another object of the present invention is to propose a strategy for QT leaf merging, and to propose an algorithm for joint optimization of dual QT decomposition.

Another object of the present invention is to propose an algorithm for joint optimization of geometrical QT and motion QT to utilize inter-leaf dependency.

[Technical Solution]

The present invention is defined by the combination of features of the independent claims. Preferred embodiments are defined in the dependent claims.

[Advantageous Effects]

The present invention can enable the design of a coding tool for high efficiency compression and can also significantly reduce required computation resources, memory requirements, a memory access bandwidth, and computation complexity by proposing a QT decomposition method with embedded block partitioning.

Furthermore, the present invention can allow more compact comparing to a full QT decomposition representation and modeling of some types of image and video signals.

Furthermore, the present invention can improve compression efficiency of video coding systems utilizing QT decomposition.

Furthermore, the present invention can reduce the computational complexity and memory requirements by using less number of QT decomposition levels for processing and/or coding of some types of image and video signals.

Furthermore, the present invention can reduce the redundant decomposition for common natural content and significant bit overhead for signaling of QT decomposition and signaling of motion and geometrical models.

[Brief Description of the Drawings]

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of an encoder carrying out encoding of a video signal according to an embodiment of the present invention;

FIG. 2 is a block diagram of a decoder carrying out decoding of a video signal according to an embodiment of the present invention;

FIG. 3 illustrates a partition structure of a coding unit according to an embodiment of the present invention;

FIG. 4 illustrates quadtree decomposition with embedded blocks according to one embodiment of the present invention;

FIG. 5 is a flow diagram illustrating a method for decoding a coding unit based on split type information according to one embodiment of the present invention;

FIG. 6 is a flow diagram illustrating a method for decoding an embedded block according to one embodiment of the present invention;

FIG. 7 and 8 are flow diagrams illustrating a method for decoding a coding unit at the time of carrying out quadtree decomposition with embedded blocks according to the embodiments of the present invention;

FIG. 9 illustrates a syntax structure for decoding embedded blocks according to one embodiment of the present invention;

FIG. 10 illustrates parameters of an embedded block according to one embodiment of the present invention;

FIG. 11 is a flow diagram illustrating a method for generating embedded blocks according to one embodiment of the present invention;

FIG. 12 is a flow diagram illustrating a method for encoding a coding unit at the time of carrying out quadtree decomposition with embedded blocks according to one embodiment of the present invention; and

FIG. 13 is a block diagram of a processor for decoding embedded blocks according to one embodiment of the present invention.

[Best Mode]

A method for decoding a video signal according to the present invention comprises obtaining a split flag from the video signal, wherein the split flag indicates whether a coding unit is partitioned; when the coding unit is partitioned according to the split flag, obtaining split type information of the coding unit, wherein the split type information includes embedded block type information and the embedded block type information indicates that an embedded block partition (EBP) is a block located at an arbitrary spatial location within the coding unit; and decoding the coding unit based on the split type information of the coding unit.

The method for decoding a video signal according to the present invention further comprises obtaining number information of the embedded block partition (EBP); obtaining parameter information of each EBP according to the number information; and based on the parameter information, decoding the EBP.

The method for decoding a video signal according to the present invention further comprises generating a residual signal of the EBP; and decoding the coding unit except for the pixels of the EBP.

The method for decoding a video signal according to the present invention further comprises generating a residual signal of the EBP; and decoding the coding unit by applying a predetermined weight to the residual signal.

The parameter information according to the present invention includes at least one of depth information, position information, and size information of the EBP.

The parameter information according to the present invention is included by at least one of a sequence parameter set, a picture parameter set, a slice header, a coding tree unit level, or a coding unit level.

A method for encoding a video signal according to the present invention comprises carrying out full quadtree decomposition with respect to a coding unit; collecting motion information of partition blocks within the coding unit; identifying motion patterns of the partition blocks based on the collected motion information; and generating an embedded block by merging partition blocks having the same motion pattern, wherein the embedded block refers to a block located at an arbitrary spatial location within the coding unit.

The method for encoding a video signal according to the present invention further comprises calculating a first rate-distortion cost of an embedded block and a second rate-distortion cost of a remaining block, wherein the remaining block refers to the coding unit except for the embedded block; determining the number of embedded blocks optimizing a function based on the sum of the first rate-distortion cost and the second rate-distortion cost; and encoding the coding unit.

The embedded block according to the present invention corresponds to a predetermined type and size.

An apparatus for decoding a video signal according to the present invention comprises a split flag obtaining unit obtaining a split flag from the video signal, wherein the split flag indicates whether a coding unit is partitioned; a split type obtaining unit obtaining split type information of the coding unit from the video signal when the coding unit is partitioned according to the split flag, wherein the split type information includes embedded block type information and the embedded block type information indicates that an embedded block partition (EBP) is a block located at an arbitrary spatial location within the coding unit; and an embedded block decoding unit decoding the coding unit based on the split type information of the coding unit.

The embedded block decoding unit according to the present invention further comprises an embedded block parameter obtaining unit obtaining number information of the EBP and obtaining parameter information of each EBP according to the number information, wherein the EBP is decoded based on the parameter information.

The embedded block decoding unit according to the present invention further comprises an embedded block residual obtaining unit generating a residual signal of the EBP, and the apparatus further comprises a coding unit decoding unit decoding the coding unit except for the pixels of the EBP.

The embedded block decoding unit according to the present invention further comprises an embedded block residual obtaining unit generating a residual signal of the EBP, and the apparatus further comprises a coding unit decoding unit decoding the coding unit by applying a predetermined weight to the residual signal.

An apparatus for encoding a video signal according to the present invention comprises an image partitioning unit generating an embedded block by carrying out full quadtree decomposition with respect to a coding unit, collecting motion information of partition blocks within the coding unit, identifying motion patterns of the partition blocks based on the collected motion information, and merging partition blocks having the same motion pattern, wherein the embedded block refers to a block located at an arbitrary spatial location within the coding unit.

The image partitioning unit according to the present invention calculates a first rate-distortion cost of an embedded block and a second rate-distortion cost of a remaining block; and determines the number of embedded blocks optimizing a function based on the sum of the first rate-distortion cost and the second rate-distortion cost; and the apparatus encodes the coding unit, wherein the remaining block refers to the coding unit except for the embedded block.

[Mode for Invention]

Hereinafter, exemplary elements and operations in accordance with embodiments of the present invention are described with reference to the accompanying drawings.

Furthermore, terms used in this specification are common terms that are now widely used, but in special cases, terms randomly selected by the applicant are used. In such a case, the meaning of a corresponding term is clearly described in the detailed description of a corresponding part. Accordingly, it is to be noted that the present invention should not be construed as being based on only the name of a term used in a corresponding description of this specification and that the present invention should be construed by checking even the meaning of a corresponding term.

Furthermore, terms used in this specification are common terms selected to describe the invention, but may be replaced with other terms for more appropriate analyses if other terms having similar meanings are present. For example, a signal, data, a sample, a picture, a frame, and a block may be properly replaced and interpreted in each coding process. And, partitioning, decomposition, splitting, and division may be properly replaced and interpreted in each coding process.

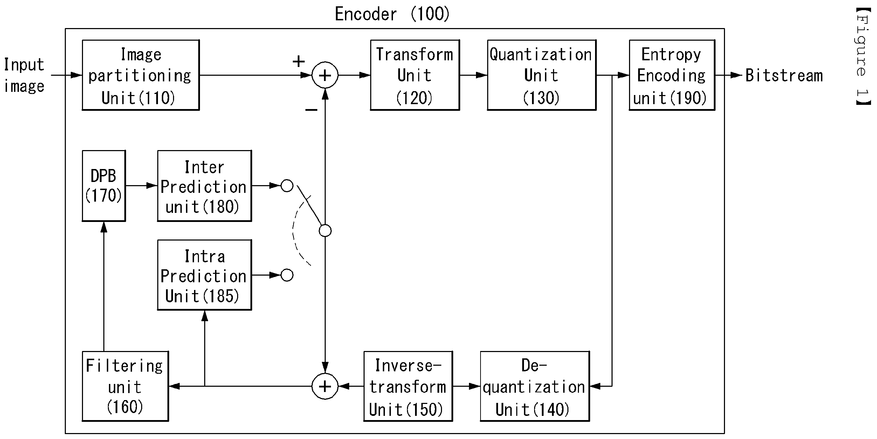

FIG. 1 is a block diagram of an encoder carrying out encoding of a video signal according to an embodiment of the present invention.

With reference to FIG. 1, an encoder 100 comprises an image partitioning unit 110, a transform unit 120, a quantization unit 130, a de-quantization unit 140, an inverse transform unit 150, a filtering unit 160, a decoded picture buffer (DPB) 170, an inter-prediction unit 180, an intra-prediction unit 185, and an entropy encoding unit 190.

The image partitioning unit 110 can partition an input image (or picture, frame) into one or more processing unit blocks (in what follows, it is called a 'processing block'). For example, the processing block can correspond to a coding tree unit (CTU), a coding unit (CU), a prediction unit (PU), or a transform unit (TU).

It should be noted that the aforementioned terms are introduced only for the convenience of description and the present invention is not limited to the definition of the corresponding term. Also, for the convenience of description, this document employs the term of coding unit as a unit used for a process of encoding or decoding a video signal; however, it should be understood that the present invention is not limited to the case above and the term can be interpreted appropriately according to current descriptions of the invention.

In particular, the image partitioning unit 110 according to the present invention can partition an image so that the partitioned image can include an embedded block (EB) within the coding unit. At this time, the embedded block (EB) can correspond to the block located at an arbitrary spatial location within the coding unit. For example, an input image can be decomposed into quadtree blocks, and a quadtree node can be decomposed to include at least one embedded block. Meanwhile, an embedded block (EB) may be called an embedded block partition (EBP) or an embedded block partitioning (EBP), but it is called an embedded block (EB) for the sake of convenience.

In the embodiment below, the image partitioning unit 110 can implement a process of decomposing a coding unit to include an embedded block and a method for coding a coding unit which includes the embedded block.

The encoder 100 can generate a residual signal by subtracting a prediction signal output from the inter-prediction unit 180 or the intra-prediction unit 185 from an input image signal, and the generated residual signal is sent to the transform unit 120.

The transform unit 120 can generate transform coefficients by applying a transform technique to the residual signal.

The quantization unit 130 quantizes the transform coefficients and sends the quantized transform coefficients to the entropy encoding unit 190. The entropy encoding unit 190 can carry out entropy coding of the quantized signal and output the entropy coded quantization signal as a bitstream.

Meanwhile, a quantized signal output from the quantization unit 130 can be used to generate a prediction signal. For example, a quantized signal can reconstruct a residual signal by applying de-quantization and inverse transformation respectively through the de-quantization unit 140 and the inverse quantization unit 150 within a loop. By adding the reconstructed residual signal to a prediction signal output from the inter-prediction unit 180 or the intra-prediction unit 185, a reconstructed signal can be generated.

Meanwhile, image degradation can be observed from the compression process above, exhibiting block boundaries as neighboring blocks are quantized by different quantization parameters. Such a phenomenon is called blocking artifact which is one of important metrics to evaluate image quality. To reduce the artifact, a filtering process can be carried out. Through a filtering process, image quality can be improved by not only removing blocking artifact and but also reducing an error with respect to a current picture.

The filtering unit 160 applies filtering to a reconstructed signal; and outputs the filtered signal to a player or sends the filtered signal to the decoded picture buffer 170. The filtered signal transmitted to the decoded picture buffer 170 can be used as a reference picture in the inter-prediction unit 180. In this manner, by using the filtered picture as a reference picture in an inter-image prediction mode, not only the image quality but also the coding efficiency can be improved.

The decoded picture buffer 170 can store the filtered picture so that the inter-prediction unit 180 can use the filtered picture as a reference picture.

The inter prediction unit 180 carries out temporal prediction and/or spatial prediction to remove temporal and/or spatial redundancy with reference to a reconstructed picture. At this time, since the reference picture used for carrying out prediction is a transformed signal quantized and de-quantized in units of blocks through previous encoding/decoding, blocking artifact or ringing artifact can be observed.

Therefore, the inter-prediction unit 180 can interpolate pixel values with subpixel accuracy by applying a low pass filter to remedy performance degradation due to signal discontinuity or quantization. A subpixel refers to an artificial pixel generated from an interpolation filter, and an integer pixel denotes an actual pixel in the reconstructed picture. Linear interpolation, bi-linear interpolation, or Wiener filter can be used for interpolation.

An interpolation filter, being applied to a reconstructed picture, can enhance prediction performance. For example, the inter-prediction unit 180 can carry out prediction by generating interpolated pixels by applying an interpolation filter to integer pixels and using interpolated blocks comprising interpolated pixels as prediction blocks.

The intra-prediction unit 185 can predict a current block by referring to the samples around a block to which encoding is to be applied at the moment. The intra-prediction unit 185 can carry out the following process to perform intra-prediction. First, the intra-prediction unit 185 can prepare reference samples required for generating a prediction signal. Then, the intra-prediction unit 185 can generate a prediction signal by using the prepared reference samples. Next, the intra-prediction unit 185 encodes a prediction mode. At this time, reference samples can be prepared through reference sample padding and/or reference sample filtering. Since reference samples go through a prediction and a reconstruction process, a quantization error may occur. Therefore, to reduce the quantization error, a reference sample filtering process can be carried out for each prediction mode employed for the intra-prediction.

The prediction signal generated through the inter-prediction unit 180 or the intra-prediction unit 185 can be used to generate a reconstruction signal or a residual signal.

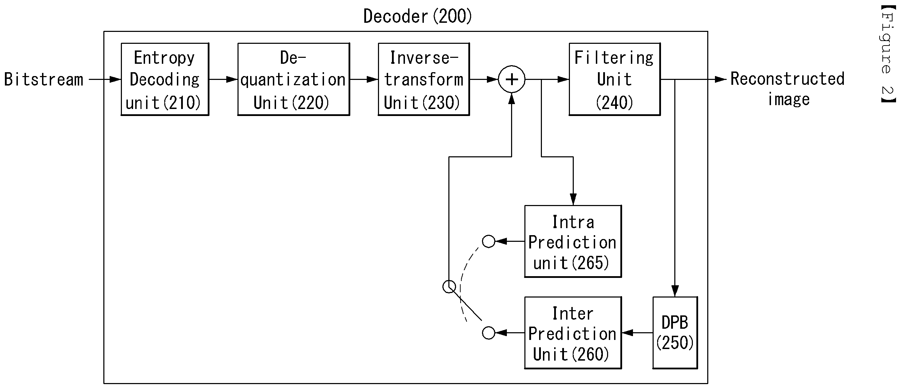

FIG. 2 is a block diagram of a decoder carrying out decoding of a video signal according to an embodiment of the present invention.

With reference to FIG. 2, a decode 200 comprises an entropy decoding unit 210, a de-quantization unit 220, an inverse transform unit 230, a filtering unit 240, a decoded picture buffer (DPB) unit 250, an inter-prediction unit 260, and an intra-prediction unit 265.

A reconstructed video signal produced through the decoder 200 can be played through a player.

The decoder 200 can receive a signal output from the encoder of FIG. 1 (namely, bitstream), and the received signal can be entropy decoded through the entropy decoding unit 210.

The de-quantization unit 220 obtains transform coefficients from an entropy decoded signal by using the information of quantization step size.

The inverse transform unit 230 obtains a residual signal by inversely transforming the transform coefficients.

By adding the obtained residual signal to a prediction signal output from the inter-prediction unit 260 or the intra-prediction unit 265, the inverse transform unit 230 generates a reconstructed signal.

The filtering unit 240 performs filtering on the reconstructed signal and outputs the filtered reconstructed signal to a player or sends the filtered reconstructed signal to the decoded picture buffer unit 250. The filtered signal sent to the decoded picture buffer unit 250 can be used in the inter-prediction unit 260 as a reference picture.

In the present invention, embodiments described with respect to the filtering unit 160, the inter-prediction unit 180, and the intra-prediction unit 185 of the encoder 100 can be applied the same for the filtering unit 240, the inter-prediction unit 260, and the intra-prediction unit 265, respectively.

Still image compression or video compression technology (for example, HEVC) of today employs a block-based image compression method. A block-based image compression method divides an image into regions of particular block units and is able to reduce memory usage and computational loads.

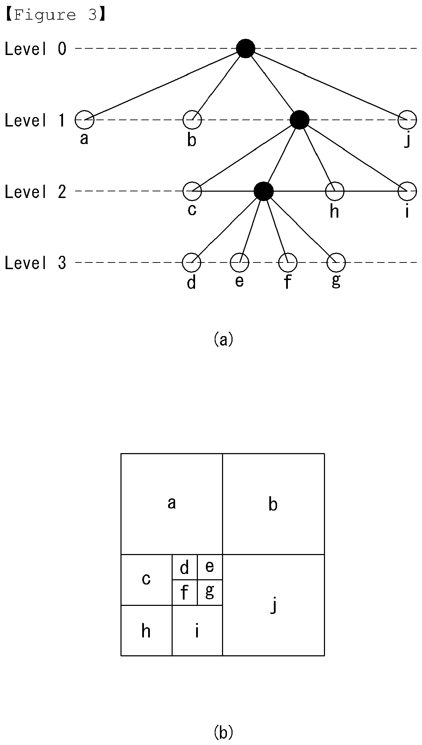

FIG. 3 illustrates a partition structure of a coding unit according to an embodiment of the present invention.

An encoder can partition an image (or a picture) by rectangular shaped coding tree units (CTUs). And the encoder encodes the CTUs one after another according to a raster scan order.

For example, the CTU size can be determined by one of 64 x 64, 32 x 32, and 16 x 16. The encoder can select the CTU size according to the resolution or characteristics of an input image. The CTU can include a coding tree block (CTB) about a luminance component and a coding tree block (CTB) about two chrominance components corresponding to the luminance component.

One CTU can be decomposed into a quadtree structure. For example, one CTU can be partitioned into four equal-sized square units. Decomposition according to the quadtree structure can be carried out recursively.

With reference to FIG. 3, a root node of the quadtree can be related to the CTU. Each node in the quadtree can be partitioned until it reaches a leaf node. At this time, the leaf node can be called a coding unit (CU).

A CU is a basic unit for coding based on which processing of an input image, for example, intra- or inter-prediction is carried out. The CU can include a coding block (CB) about a luminance component and a coding block (CB) about two chrominance components corresponding to the luminance component. For example, the CU size can be determined by one from among 64 x 64, 32 x 32, 16 x 16, and 8 x 8. However, the present invention is not limited to the case above; in the case of a high resolution image, the CU size can be larger or diversified.

With reference to FIG. 3, a CTU corresponds to a root node and has the shortest depth (namely, level 0). According to the characteristics of an input image, the CTU may not be subdivided, and in this case, a CTU corresponds to a CU.

A CTU can be decomposed into a quadtree structure, and as a result, sub-nodes can be generated with a depth of level 1. Among sub-nodes having a depth of level 1, a node no longer partitioned (namely, a leaf node) corresponds to the CU. In the example of FIG. 3(b), the CU(a), CU(b), and CU(j) corresponding respectively to the node a, b, and j have been partitioned from a CTU for once and have a depth of level 1.

At least one of the nodes having a depth of level 1 can be partitioned again into a quadtree structure. And the node no longer partitioned (namely, a leaf node) among the sub-nodes having a depth of level 2 corresponds to a CU.

In the example of FIG. 3(b), the CU(c), CU(h), and CU(i) corresponding respectively to the node c, h, and i have been partitioned twice from the CTU and have a depth of level 2.

At least one of the nodes having a depth of level 2 can be subdivided again into a quadtree structure. And the node no longer subdivided (namely, a leaf node) among the sub-nodes having a depth of level 3 corresponds to a CU. In the example of FIG. 3(b), the CU(d), CU(e), CU(f), and CU(g) corresponding respectively to the node d, e, f, and g have been subdivided three times from the CTU and have a depth of level 3.

The encoder can determine the maximum or the minimum size of a CU according to the characteristics (for example, resolution) of a video image or by taking account of encoding efficiency. A bitstream can include information about the characteristics or encoding efficiency or information from which the characteristics or encoding efficiency can be derived. The CU with the largest size can be called the largest coding unit (LCU), while the CU with the smallest size can be called the smallest coding unit (SCU).

A CU having a tree structure can be partitioned hierarchically by using predetermined maximum depth information (or maximum level information). Each partitioned CU can have depth information. Since the depth information represents the number of partitions and/or degree of partitions of the corresponding CU, the depth information may include information about the CU size.

Since the LCU is partitioned into a quadtree structure, the SCU size can be obtained by using the size of the LCU and maximum depth information of the tree. Or inversely, size of the LCU can be obtained from the size of the SCU and maximum depth of the tree.

For each CU, information indicating whether the corresponding CU is partitioned can be delivered to the decoder. For example, the information can be defined as a split flag and represented by a syntax element "split_cu_flag". The split flag can be incorporated into all of the CUs except for the SCU. For example, if the value of the split flag is '1', the corresponding CU is partitioned again into four CUs, while if the split flag is '0', the corresponding CU is not partitioned further, but a coding process with respect to the corresponding CU can be carried out.

Although the embodiment of FIG. 3 has been described with respect to a partitioning process of a CU, the quadtree structure can also be applied to the transform unit (TU) which is a basic unit carrying out transformation.

A TU can be partitioned hierarchically into a quadtree structure from a CU to be coded. For example, the CU corresponds to a root node of a tree for the TU.

The TU paritioned from the CU can be partitioned into smaller TUs since the TU can be partitioned into a quadtree structure. For example, the size of the TU can be determined by one from among $32\times32$, $16\times16$, $8\times8$, and $4\times4$. However, the present invention is not limited to the case above; in the case of a high resolution image, the TU size can be larger or diversified.

For each TU, information representing whether the corresponding TU is partitioned can be delivered to the decoder. For example, the information can be defined as a split transform flag and represented by a syntax element "split_transform_flag".

The split transform flag can be incorporated into all of the TUs except for the TU with the smallest size. For example, if the value of the split transform flag is '1', the corresponding CU is partitioned again into four CUs, while if the split transform flag is '0', the corresponding TU is not partitioned further.

As described above, a CU is a basic coding unit, based on which intra- or inter-prediction is carried out. To code an input image more effectively, a CU can be decomposed into prediction units (PUs).

A PU is a basic unit for generating a prediction unit; a PU can generate prediction blocks in various ways in units of PUs even within one CU. A PU can be decomposed differently according to whether an intra-prediction mode or an inter-prediction mode is used as a coding mode of the CU to which the PU belongs.

Still image compression or video compression technology (for example, HEVC) of today employs a block-based image compression method. However, since the block-based image compression technology is limited to the partitioning of an image into square units, inherent characteristics of an image may not be properly taken into account. In particular, the block-based image compression is not suitable for coding of complex texture. Accordingly, an advanced image compression technology capable of compressing an image more effectively is required.

QT partitioning is widely used as a recent solution for a video coding algorithm and can be used for block partitioning, signaling scheme, and so on.

QT decomposition can be used for prediction QT used for a prediction process and transform QT used for block transform.

QT decomposition can be considered as sub-optimal in terms of spatially non-uniform content representation and motion modeling.

QT representation may capture horizontal and vertical edge discontinuities at dyadic locations within the block. Therefore, if split is required in a non-dyadic location, or if split is required in non-horizontal and non-vertical directions, the QT decomposition would proceed to smaller blocks to achieve higher accuracy of representation, when presumably each leaf cover a smooth image region without discontinuities with a single motion model.

In some circumstances, QT decomposition and signaling may become sub-optimal for spatial and motion model represented by tree and this would lead to increase in number of decomposition and increase in signaling bit overhead. Especially this situation may be common with proceeding to large LCU sizes.

To overcome this problem, the present invention proposes QT decomposition with geometrical modeling. A polynomial geometrical modeling introduced in decomposition process identifies characteristics (e.g. direction) of node splitting to meet actual boundaries of the image fragment represented by a particular node. The polynomial geometrical modeling can be described with few parameters, e.g. a straight line, an angle of the splitting line and its offset from 0,0 node.

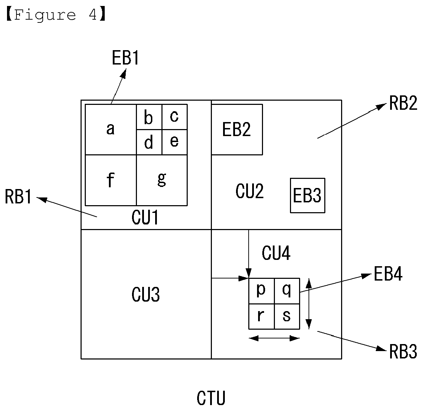

FIG. 4 illustrates quadtree decomposition with embedded blocks according to one embodiment of the present invention.

Utilization of geometrical modeling in QT decomposition allows adjusting QT decomposition to meet actual spatial boundaries of image fragment with reduced complexity of QT decomposition, and therefore with reduced bit budget for split-signaling.

The present invention may utilize a flexible block partitioning and diagonal partitioning to the prediction QT. And, the present invention may employ QT decomposition to be adjusted to non-vertical and non-horizontal splits.

Non-square partitions introduce a rudimentary and limited capability to adjust of QT decomposition to spatial locations within QT with refined accuracy, and this solution may be a good compromise between complexity and performance. However, since non-square decomposition is conducted in leaf of CTB, no further QT decomposition is allowed from this non-dyadic position, and significant complexity QT (with significant bit overhead) may still be required to describe spatially localized object within QT.

QT decomposition with geometrical modeling can allow adjusting QT decomposition to edges located in non-dyadic spatial locations. However, optimization algorithm of reasonable complexity for implementing a QT decomposition with GM at each node is needed to be provided. Utilizing GM at QT leaf assumes that no further decomposition is possible starting from this non-dyadic location. The present invention may utilize a simplified GM with limited set of non-square rectangular partitioning, so called Prediction Blocks, which provide limited capability of QT to adjust to spatial edges at non-dyadic positions.

QT decomposition has difficulties in exploiting dependencies between neighboring leafs, if their parents are different. To address this problem, the present invention provides various leaf merging strategies, most of them are based on RDO and feature high complexity. Furthermore, the present invention provides an algorithm for joint optimization of dual QT decomposition (e.g. QT decomposition for motion model and QT decomposition for spatial boundaries in image).

As a more practical solution, the present invention may provide a dual QT decomposition. For example, one is for spatial boundaries (transform QT), another is for motion modeling (prediction QT). In this design, a transform QT leaf can span over prediction QT leafs boundary and thus utilizing spatial dependences between neighboring leafs of prediction QT.

In terms of motion modeling, an embodiment of the present invention introduces a leaf merging in prediction QT, which employs spatial dependences in the motion field. The merging process may be conducted independently from construction of prediction and transforms QT and it can minimize bit budget for motion model. Therefore, the present invention provides a method to utilize cross-leaf dependency. For example, an embodiment of the present invention may use a merge mode to share motion information between prediction units(PUs).

Next generation video content is likely to feature high spatial-resolution (picture sizes in number of pixels), fast temporal-sampling (high frame-rate) and high dimensionality of scene representation. It is anticipated that utilization of quadratic tree decomposition for such data would lead to increase in maximal spatial size of utilized QT and maximal depth of QT decomposition. For example, a QT being constructed from size of 512x512 down to block sizes 8x8 can results in redundant decomposition for common natural content and significant bit overhead for signaling of QT decomposition and signaling of motion and geometrical models.

The present invention proposes a special case of QT decomposition when a node(or leaf) in QT in addition to and/or instead of conventional quadratic splitting can be decomposed with a limited number of embedded block (EB). In this case, the embedded block (EB) may be defined with a block located at arbitrary spatial locations within a node (or leaf, block). For example, the node may be one of CTU, CU, PU or TU.

For example, referring to FIG. 4, a CTU corresponds to a root node and can be decomposed into four blocks through QT decomposition, which are called CU1, CU2, CU3, and CU4, respectively. The CU1, CU2, CU3, and CU4 can be further decomposed to have embedded blocks. For example, CU1 can have an embedded block EB1, CU2 an embedded block EB2 and EB3, and CU4 an embedded block EB4.

In an embodiment of the present invention, embedded block (EB) can further perform a quadratic splitting, thus become an embedded QT (EQT) or embedded QT decomposition. At this time, embedded QT (EQT) or embedded QT decomposition can indicate that an embedded block is QT decomposed.

For example, the embedded block EB1 can be partitioned into four blocks through QT decomposition, and a partitioned block can be further partitioned into four blocks through QT decomposition.

Referring to FIG. 4, the embedded block EB1 can be partitioned into a block a, block (b, c, d, e), block f, and block g; the block (b, c, d, e) in the second quadrant can be partitioned again into block b, block c, block d, and block e. It can be seen that the embedded block EB1 is located at an arbitrary spatial location within the block CU1.

It can be seen that the embedded blocks EB2 and EB3 are located at arbitrary spatial locations within the block CU2 without additional partition.

It can be seen that the embedded block EB4 can be partitioned into block p, block q, block r, and block s and is located at an arbitrary spatial location within the block CU4.

Meanwhile, the block region except for an embedded block can be defined as a remaining block. For example, the region of the block CU1 except for the embedded block EB1 can be defined as a remaining block RB1. In the same way, the region of the block CU2 except for the embedded blocks EB2 and EB3 can be defined as a remaining block RB2, and the region of the block CU4 except for the embedded block EB4 can be defined as a remaining block RB3.

In an embodiment of the present invention, the parent node, which performs splitting with an embedded block, may be processed or coded as a leaf which excludes pixels covered by an embedded block. The result of QT decomposition may be produced as combined decompositions without overlap in pixel domain between parent leaf and embedded block. For example, in the case of FIG. 4, the CU1 can be coded while the pixels of the embedded block EB1 are being excluded. In other words, CU1 can be coded by coding only those pixels of the remaining block RB1. At this time, the embedded block EB1 can be coded and transmitted separately. In this document, such a coding scheme will be called critical decomposition coding.

In another embodiment of the present invention, the parent node, which performs splitting with an embedded block, may be processed or coded as a leaf which includes pixels covered by an embedded block. The result of QT decomposition may be produced as superposition of decompositions, where resulting pixels processed by all embedded QTs within a node may be blended with weights with pixels processed by a parent node. For example, in the case of FIG. 4, CU2 can be coded as a leaf node including the pixels of the embedded blocks EB2 and EB3. In other words, CU2 can be coded by coding all of the pixels of CU2 and embedded blocks EB2 and EB3. At this time, the pixels of the embedded blocks EB2 and EB3 can be coded by applying weights thereto. In this document, such as coding scheme will be called over-complete decomposition coding.

In another embodiment of the present invention, the parameter of embedded block (EB parameter) may include at least one of spatial location information, size information in vertical and horizontal direction, and identification information, and may be applied to utilized QT within predefined set of QT types.

In another embodiment of the present invention, parameter of embedded block (EB parameter) may include decomposition parameter. For example, the decomposition parameter may include at least one of range information of QT decomposition, split grid information, and the split grid information may include at least one of dyadic type, or non-dyadic type, geometrical model type.

In another embodiment of the present invention, parameters of QT decomposition may be known in advance to both encoder and decoder.

In another embodiment of the present invention, size information and type information of embedded block may be signaled based on an identifier in a predefined type set of the embedded block.

In another embodiment of the present invention, the parameter of embedded block (EB parameter) may be signaled in the bitstream. Signaling can done either at the QT node level, at QT root level, in LCU level, in slice header, in PPS, in SPS, or with other syntax element.

In another embodiment of the present invention, parameters of embedded block (EB parameter) may be derived from at least one of an encoder or a decoder.

In another embodiment of the present invention, the parameters of embedded block (EB parameter) may include motion information associated with pixels within embedded block.

In another embodiment of the present invention, a parent node for embedded block may include motion information associated with pixels covered by parent node, wherein the parent node may include or not include pixels covered by embedded block.

In another embodiment of the present invention, the embedded block within a parent node may share EB parameter.

In another embodiment of the present invention, the embedded block within a parent node may share EB parameter with embedded block in another parent node.

In what follows, embodiments and signaling that can be carried out from the viewpoint of an encoder and a decoder will be described.

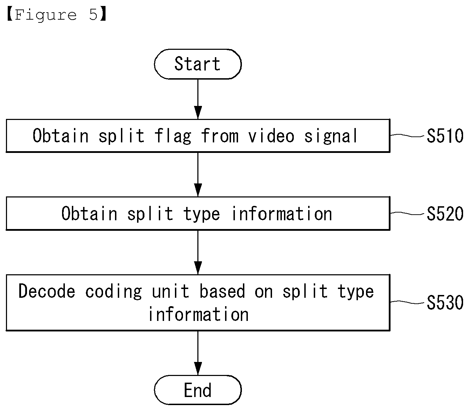

FIG. 5 is a flow diagram illustrating a method for decoding a coding unit based on split type information according to one embodiment of the present invention.

As described above, a CTU can be partitioned into CUs through QT decomposition, and a CU can be further partitioned. At this time, a split flag can be used. The split flag can denote the information indicating whether a coding unit is partitioned; for example, the split flag can be represented by a syntax element "split_cu_flag".

The decoder 200 can receive a video signal and obtain a split flag from the video signal S510. For example, if the split flag is '1', it indicates that the current coding unit is partitioned into sub-coding units, while, if the split flag is '0', it indicates that the current coding unit is not partitioned into sub-coding units.

Meanwhile, the decoder 200 can obtain split type information form a video signal S520. The split type information represents the type by which a coding unit is partitioned. For example, the split type information can include at least one of an embedded block (EB) split type, a QT split type, and a dyadic split type. The EB split type refers to such a partition scheme where a coding unit is partitioned to include an embedded block, the QT split type refers to the scheme where a coding unit is partitioned through QT decomposition, and the dyadic split type refers to the scheme where a coding unit is partitioned into two blocks.

Based on the split type information, the decoder 200 can decode a coding unit S530. At this time, the present invention can provide different coding methods according to the split type information. Specific coding methods will be described in detail through the following embodiment.

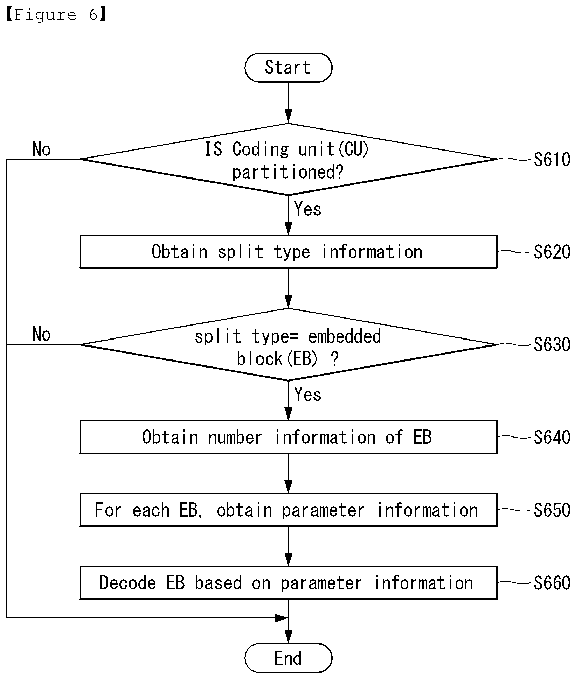

FIG. 6 is a flow diagram illustrating a method for decoding an embedded block according to one embodiment of the present invention.

The present invention provides a method for coding embedded blocks when a coding unit is partitioned to include the embedded blocks.

The decoder 200 can check whether a coding unit is partitioned S610. Whether the coding unit is partitioned can be checked by a split flag obtained from a video signal. If the split flag is '1', it indicates that the coding unit is partitioned, while, if the split flag is '0', it indicates that the coding unit is not partitioned.

If it is determined from the checking result that the coding unit is partitioned, the decoder 200 can obtain split type information from a video signal S620. The split type information represents the type by which a coding unit is partitioned; for example, the split type information can include at least one of an embedded block (EB) split type, a QT split type, and a dyadic split type.

The decoder 200 can check whether the split type information corresponds to the EB split type S630.

If the split type information corresponds to the EB split type, the decoder 200 can obtain number information of embedded blocks S640. For example, referring to FIG. 4, the split type information of CU1, CU2, and CU3 can denote the EB split type. And the number information of embedded blocks for each of CU1 and CU3 is 1 (EB1, EB4), and the number information of embedded blocks for CU2 is 2 (EB2 and EB3) .

The decoder 200 can obtain parameter information about each embedded block according to the obtained number information of embedded blocks S650. For example, the parameter information can include at least one of location information, horizontal size information, and vertical size information of an embedded block.

The decoder 200 can decode the embedded block based on the parameter information S660.

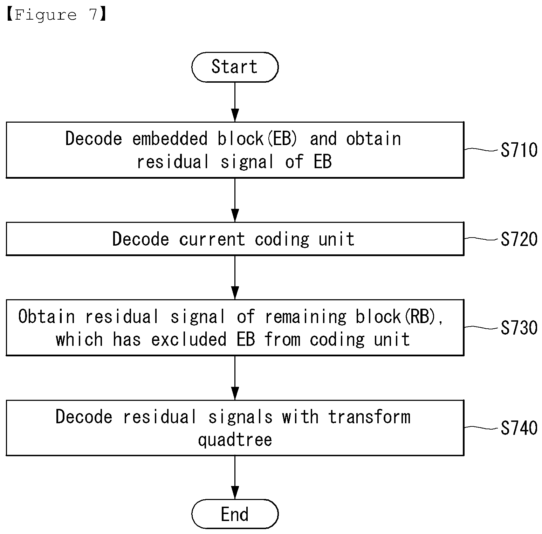

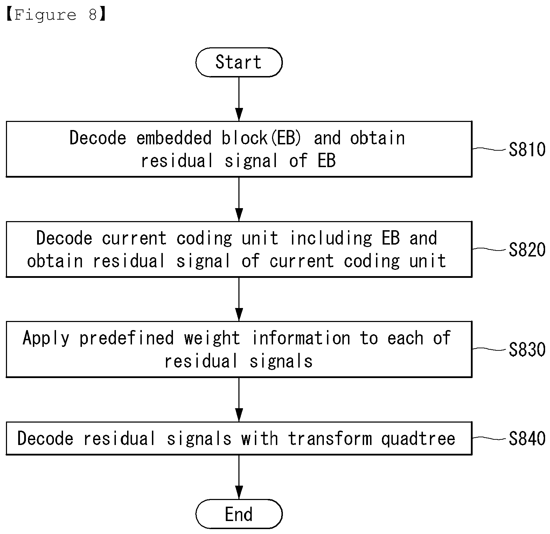

FIG. 7 and 8 are flow diagrams illustrating a method for decoding a coding unit at the time of carrying out quadtree decomposition with embedded blocks according to the embodiments of the present invention.

As one embodiment of the present invention, provided is a critical decomposition decoding method, namely, a method for decoding a coding unit while pixels of embedded blocks are being excluded.

Referring to FIG. 7, the decoder 200 can decode an embedded block and obtain a residual signal of the embedded block S710. This procedure can be carried out for each embedded block according to the number information of embedded blocks. The embedded block can be decoded based on EB parameters.

The decoder 200 can decode a current coding unit S720 and obtain a residual signal about a remaining block S730. At this time, the remaining block denotes the region of a coding unit except for the pixels of the embedded block.

The decoder 200 can decode a residual signal of an embedded block and a residual signal of the remaining block based on a transform quadtree S740.

For example, with reference to FIG. 4, CU1 can be coded while the pixels of the embedded block EB1 are being excluded. In other words, the embedded block EB1 and the remaining block RB1 can be coded and transmitted separately.

As another embodiment of the present invention, pixels of the embedded block can be coded with a value '0' or a value corresponding to a white color.

As another embodiment of the present invention, provided is a over-complete decomposition decoding method, namely, a method for decoding a coding unit while pixels of embedded blocks are being included.

Referring to FIG. 8, the decoder 200 can decode an embedded block and obtain a residual signal of the embedded block S810. This procedure can be carried out for each embedded block according to the number information of embedded blocks. The embedded block can be decoded based on EB parameters.

The decoder 200 can decode a current coding unit which includes an embedded block and obtain a residual signal of the current coding unit S820. For example, when pixels of the embedded block are filled with '0' or a white color, the pixels of the embedded block can be processed by a value '0' or a value corresponding to a white color. In this case, the decoder 200 can decode the current coding unit which includes the embedded block filled with '0' or a white color.

The decoder 200 can aggregate residual signals generated with respect to the individual embedded blocks.

And the decoder 200 can apply predetermined weights to the residual signals generated with respect to the individual embedded blocks S830.

The decoder 200 can decode residual signals based on QT quadtree S840.

For example, in the case of FIG. 4, CU2 can be coded as a leaf node including the pixels of the embedded blocks EB2 and EB3. The decoder 200 can decode the embedded blocks EB2 and EB3; and obtain a residual signal EB2_R of the embedded block EB2 and a residual signal EB3_R of the embedded block EB3. And the decoder 200 can decode the current codding unit CU2 including the embedded blocks EB2 and EB3; and obtain a residual signal CU2_R of the current coding unit CU2.

The decoder 200 can aggregate the residual signals EB2_R, EB3_R generated with respect to the individual embedded blocks and decode the current coding unit CU2 by applying a predetermined weight to each of the aggregated residual signals.

The decoder 200 can decode residual signals based on transform quadtree.

Those parts of the embodiments of the present invention overlapping with each other can be omitted; therefore, the embodiments can be combined with each other. For example, the embodiments of FIGs. 5 to 8 can be combined with each other.

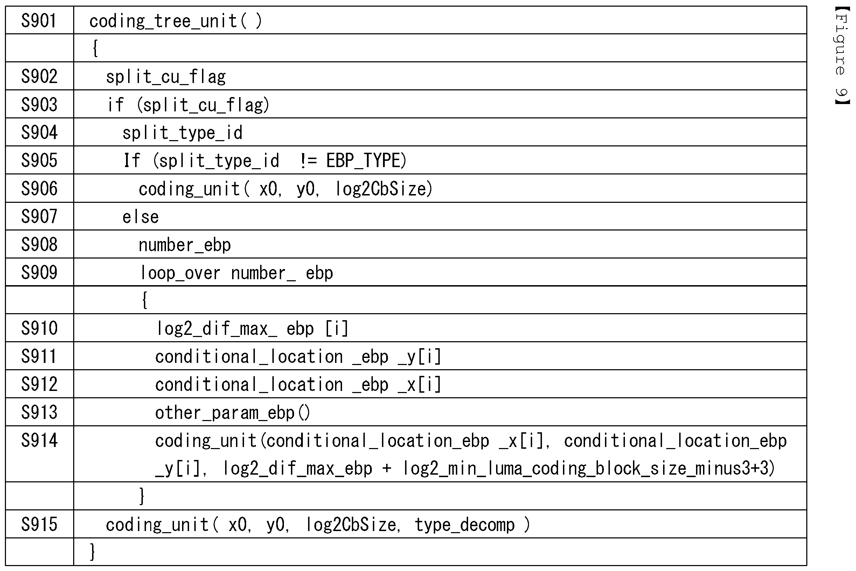

FIG. 9 illustrates a syntax structure for decoding embedded blocks according to one embodiment of the present invention.

A picture constituting a video signal can comprise at least one slice, and a slice can be partitioned into slice segments. The slice segment can include data obtained from coding a CTU, and the CTU can include partition information of a coding unit S901.

As described earlier, the CTU can be partitioned into a quadtree structure or partitioned to include embedded blocks.

The decoder, by checking a split flag, can determine whether the CTU has been partitioned into blocks. For example, the decoder can obtain a syntax element "split_cu_flag" and check whether the split flag is 0 or 1 S902. If the split_cu_flag is 1, it indicates that the CTU has been partitioned into CUs S903.

As another embodiment of the present invention, the CTU calls a function coding_quad_tree() and can check a split flag from the function. In this case, if the split flag is '0', it indicates that the CTU is not partitioned any more and a function coding_unit() can be called, while if the split flag is '1', it indicates that a function coding_quad_tree() can be called as a number of paritioned blocks and can check a split flag within the function coding_quad_tree() again. An embodiment of FIG. 9 omits the above process, but the above process may be applied to the embodiment of FIG. 9 and also similarly applied to when that split type information indicates a EB split type. For example, after S907 'else' step, the embedded block may include a process which calls a function coding_quad_tree() and checks a split flag from the function.

And the decoder can check split type information. For example, the decoder can obtain an syntax element "split_type_id" and check split type information based on that S904. The split type information indicates a type by which a coding unit (or a coding tree unit) is partitioned; for example, the split type information can include at least one of EB split type, QT split type, and dyadic split type. The split type information can be defined by a table which assigns an identification code for each split type.

The decoder can check whether split type information is EB split type S905. The algorithm shown in S905 and S907 of FIG. 9 is only an example; when the split type information is multiple, the split type information can be checked in various ways, and a separate decoding process can be applied according to the split type information.

When the split type information is not EBP_TYPE S905, the decoder can decode a coding unit S906. For example, the decoder can carry out a different type of partitioning rather than the embedded block split type. At this time, (x0,y0,log2CbSize) of coding unit (x0,y0,log2CbSize) can indicate the absolute coordinate value of a first pixel of the CU in the luminance component.

Meanwhile, when the split type information is embedded block split type S907, a process comprising the steps S908 to S914 for decoding embedded blocks and coding units can be carried out.

First, the decoder can obtain number information (number_ebp) of embedded blocks S908. And according to the number information, the decoder can carry out loop coding with respect to each embedded block S909. For example, referring to FIG. 4, in the case of CU2, number_ebp is 2, and loop coding can be carried out for each of EB2 and EB3.

The largest depth information of a current embedded block can be obtained S910. For example, the largest depth information denotes the furthest partition level of the current embedded block and can be represented by a syntax element 'log2_dif_max_ebp[i]'.

The horizontal and vertical location information of a current embedded block can be obtained S911, S912. The horizontal and vertical location information denote the distance along horizontal and vertical direction respectively from the coordinates (0,0) of the current coding unit and can be represented respectively by syntax elements "conditional_location_ebp_x[i]' and 'conditional_location_ebp_y[i]'.

The decoder can obtain additional parameter information of a current embedded block S913. For example, the parameter information can include at least one of horizontal size information or vertical size information of an embedded block.

The decoder can decode a current embedded block based on the embedded block parameter (for example, S910 to S913) S914. For example, coding unit(conditional_location_ebp _x[i], conditional_location_ebp_y[i], log2_dif_max_ebp + log2_min_luma_coding_block_size_minus3+3) can denote the location of a current embedded block.

As described above, after decoding an embedded block, the decoder can decode with respect to a parent node (for example, CTU or CU) S915. In the step S915, 'type_decomp' denotes a decoding method employed by a current CU; for example, the information can correspond to one of a critical decomposition decoding method or a over-complete decomposition decoding method.

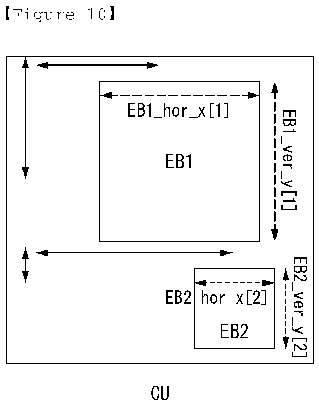

FIG. 10 illustrates parameters of an embedded block according to one embodiment of the present invention.

In an embodiment of the present invention, EB parameters as horizontal/vertical sizes, or log2_dif_max_ebp as well as spatial location of EB within a current node may be expressed in a conditional range, depending on the size of current node, number of previously coded EB and size of previously coded EB. In this case, EB parameters can include a horizontal size, a vertical size, maximum depth information, or spatial location information of EB within a current node. For example, referring to FIG. 10, horizontal size of EB1 may be represented as EB1_hor_x[1], vertical size of EB1 may be represented as EB1_ver_y[1]. And, horizontal size of EB2 may be represented as EB1_hor_x[2], vertical size of EB2 may be represented as EB1_ver_y[2].

In FIG. 10, node is coded with 2 EBs, parameters of the first EB are depicted with thick arrowed lines and parameters of second EB are depicted with thin arrowed lines. The dimensions of EB are depicted with dashed lines, and spatial coordinates range available for locating of EBPs is depicted with solid lines.

The range of possible spatial coordinates of first EB (thick solid lines) is not span over entire parent node size, but it may be restricted by the EB size. The range of possible spatial coordinate for second EB (thin solid lines) may be restricted by the sizes of first and second EBs and by a location of the first EB. The range of possible sizes for second EB may be also restricted by the size and location of the first EB.

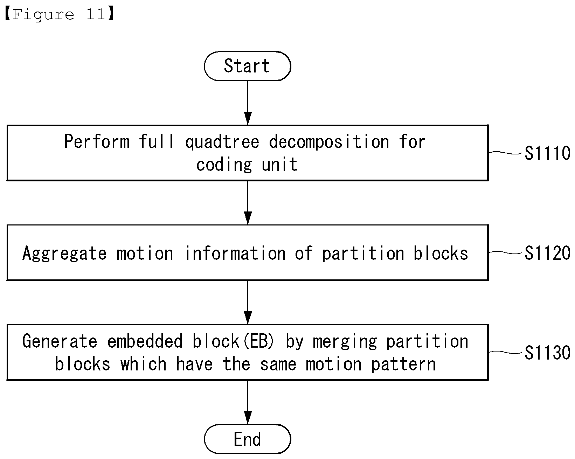

FIG. 11 is a flow diagram illustrating a method for generating embedded blocks according to one embodiment of the present invention.

The present invention may utilize the following coding schemes to implement QT with EQT decomposition.

In an embodiment of the present invention, the encoder 100 may perform full quadtree decomposition for coding unit (S1110).

And, the encoder 100 may aggregate motion information of partition blocks(S1120).

Then, the encoder 100 may Generate embedded block(EB) by merging partition blocks which have the same motion pattern (S1130).

Another embodiment of the present invention may be explained in detail as below.

For QT decomposition with embedded blocks, an encoder may utilize rate-distortion optimization based on merging process applied over nodes/leafs full QT decomposition of the current node, e.g bottom-up merging strategy. For example, the following algorithms can be utilized.

The encoder 100 may perform a full decomposition of prediction QT for the current node. The encoder 100 may perform coding of the current node and produce reference RD cost RefCost.

The encoder 100 may identify non-overlapped motion models (distinct motion patterns) and preset leafs of full-depth QT decomposition of the current node. Firstly, the encoder 100 may aggregate motion information estimated for leafs. For example, the encoder 100 may produce a residual map aggregating residual error from forward and backward prediction within current node, and produce a motion field map within the current node.

The encoder 100 may cluster motion information and partition information to identify limited number of spatially localized motion models within the current node.

The encoder 100 may merge leafs sharing the same motion model to produce EQT of predefined types and sizes.

For each EQT X, the encoder 100 may estimate its RD cost (costEqtX) of parent node and reference RD cost (RefCostX) with exclusion of pixels covered by EQT.

The encoder 100 may perform MCP(motion compensation prediction) for samples covered by EQT, and estimate RD cost CostEqtX. And, the encoder 100 may perform MCP over node, excluding EQT samples, and estimate RD cost RefCostX.

The encoder 100 may aggregate residuals from RefCostX and CostX associated partitions, and select number of EQT by using an optimization function. In this case, the below equation 1 can be used as the the optimization function.

[Equation 1]

$$min(RefCostX+costEqtX, \ refCost)$$

In this case, RefCostX indicates a reference RD cost, costEqtX indicates a RD cost related to a partition block, refCost indicates a reference RD cost of a previous EQT.

Then, the encoder 100 may encode current node and signal it to bitstream.

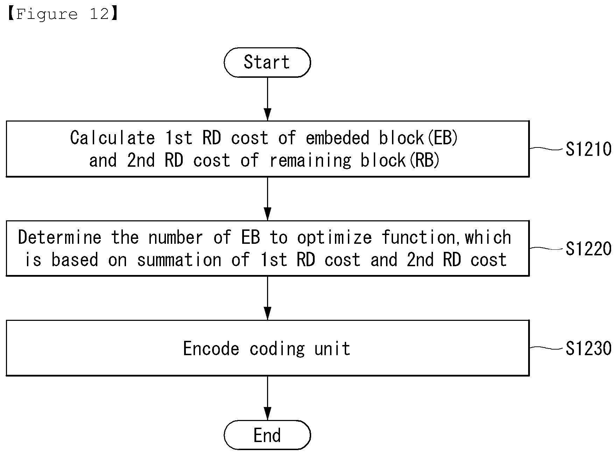

FIG. 12 is a flow diagram illustrating a method for encoding a coding unit at the time of carrying out quadtree decomposition with embedded blocks according to one embodiment of the present invention.

In the present invention, an encoder 100 may produce node decomposition using a MCP residual.

In an embodiment of the present invention, the encoder 100 may calculate 1st RD cost of embedded block(EB) and 2nd RD cost of remaining block(RB)(S1210).

And, the encoder 100 may determine the number of EB to optimize function, which is based on summation of 1st RD cost and 2nd RD cost(S1220).

Then, the encoder 100 may encode coding unit(S1230).

Another embodiment of the present invention may be explained in detail as below.

The encoder 100 may produce a residual signal for a current node utilizing forward and backward ME(motion estimation) prediction. The encoder 100 may identify limited number of spatially localized areas with high residual energy. And, the encoder 100 may segment pixel data reflecting areas with high spatially localized residual energy and produce limited number of EQT for identified areas. In this case, the EQT can have a predefined type and size.

For each EQT X, the encoder 100 may estimate a RD cost (costEqtX) of a parent node and a reference RD cost (RefCostX) with exclusion of pixels covered by EQT.

The encoder 100 may perform ME/MCP for samples covered by EQT, and estimate a RD cost CostEqtX.

The encoder 100 may perform ME/MCP over node, excluding EQT samples, and estimate a reference RD cost RefCostX.

The encoder 100 may aggregate residuals based on a RD cost costEqtX and a reference RD cost RefCostX, and select a number of utilized EQT by using an optimization function. In this case, the equation 1 can be used as the the optimization function.

Then, the encoder 100 may encode current node and signal it to bitstream.

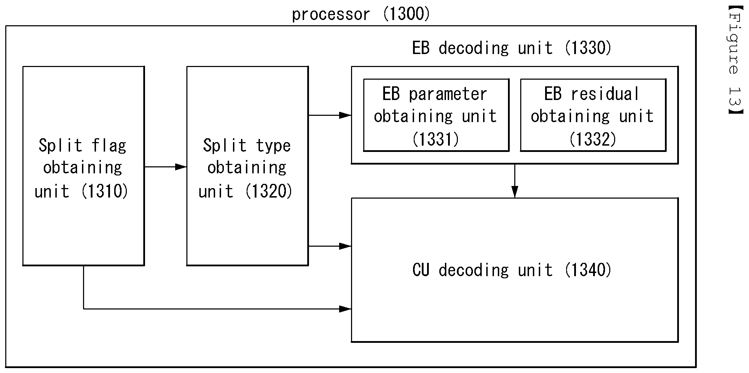

FIG. 13 is a block diagram of a processor for decoding embedded blocks according to one embodiment of the present invention.

The decoder can include a processor to which the present invention is applied. The processor 1300 can comprises a split flag obtaining unit 1310, a split type obtaining unit 1320, an embedded block decoding unit 1330, and a coding unit decoding unit 1340. And the embedded block decoding unit 1330 can include an embedded block parameter obtaining unit 1331 and an embedded residual obtaining unit 1332.

In what follows, those parts overlapping with the descriptions given above will be omitted, and the embodiments of FIGs. 1 to 12 can be applied to the embodiment of FIG. 13.

By checking a split flag, the split flag obtaining unit 1310 can check whether a CTU has been partitioned into blocks.

The split type obtaining unit 1320 can check split type information. At this time, the split type information denotes the type by which a coding unit (or a coding tree unit) is partitioned; for example, the split type information can include at least one of embedded block (EB) split type, QT split type, and dyadic split type.

The split type obtaining unit 1320 can check whether split type information corresponds to the embedded split type (EBP_TYPE).

When the split type information is not the EBP_TYPE, the processor 1300 can decode a coding unit through the coding unit decoding unit 1340.

However, when the split type information corresponds to the EBP_TYPE, the processor 1300 can decode an embedded block through the embedded block decoding unit 1330.

The embedded block parameter obtaining unit 1331 can obtain embedded block parameters for decoding embedded blocks. For example, the embedded block parameter can include number information of embedded blocks, maximum depth information of an embedded block, horizontal location information of the embedded block, vertical location information of the embedded block, and additional parameter information of the embedded block. For example, the additional parameter information can include at least one of horizontal size information and vertical size information of the embedded block.

The embedded block decoding unit 1330 can decode an embedded block based on the embedded block parameter. At this time, the embedded residual obtaining unit 1332 can obtain a residual signal of the embedded block.

As described above, after decoding an embedded block, the coding unit decoding unit 1340 can decode with respect to a parent node (for example, CTU or CU). At this time, the critical decomposition decoding method or the over-complete decomposition decoding method can be used.

As described above, the embodiments explained in the present invention may be implemented and performed on a processor, a micro processor, a controller or a chip. For example, functional units explained in FIGs. 1~2 and 13 may be implemented and performed on a computer, a processor, a micro processor, a controller or a chip.

Furthermore, the decoder and the encoder to which the present invention is applied may be included in a multimedia broadcasting transmission/reception apparatus, a mobile communication terminal, a home cinema video apparatus, a digital cinema video apparatus, a surveillance camera, a video chatting apparatus, a real-time communication apparatus, such as video communication, a mobile streaming apparatus, a storage medium, a camcorder, a VoD service providing apparatus, an Internet streaming service providing apparatus, a three-dimensional (3D) video apparatus, a teleconference video apparatus, and a medical video apparatus and may be used to code video signals and data signals.

Furthermore, the decoding/encoding method to which the present invention is applied may be produced in the form of a program that is to be executed by a computer and may be stored in a computer-readable recording medium. Multimedia data having a data structure according to the present invention may also be stored in computer-readable recording media. The computer-readable recording media include all types of storage devices in which data readable by a computer system is stored. The computer-readable recording media may include a BD, a USB, ROM, RAM, CD-ROM, a magnetic tape, a floppy disk, and an optical data storage device, for example. Furthermore, the computer-readable recording media includes media implemented in the form of carrier waves (e.g., transmission through the Internet). Furthermore, a bit stream generated by the encoding method may be stored in a computer-readable recording medium or may be transmitted over wired/wireless communication networks.

**Claims**

1. A method for decoding a video signal, comprising:

   (S510; S610) obtaining a split flag from the video signal, wherein the split flag indicates whether a coding unit is partitioned;
   (S520; S620) obtaining split type information of the coding unit when the coding unit is partitioned according to the split flag; and
   (S530; S660) decoding the coding unit based on the split type information of the coding unit,
   **characterized in, that**
   the split type information includes embedded block type information,

      wherein the embedded block type information indicates that the coding unit includes an embedded block,
      wherein the coding unit including the embedded block is a unit for coding based on which inter-prediction is carried out,
      wherein the embedded block is a block which is not positioned at a square-partitioned location and a dyadic-partitioned location within the coding unit,
      wherein the embedded block is further partitioned into four blocks through a quadtree decomposition, and
      wherein a range of possible spatial coordinates of the embedded block is restricted within the coding unit; and

   the decoding further comprises

      (S640) obtaining number information of embedded blocks for the coding unit;
      (S650) obtaining parameter information of each embedded block based on the number information and obtaining a residual signal of the embedded block; and
      (S660) decoding the embedded block based on the parameter information;
      generating a remaining block related to the embedded block, wherein the remaining block represents the coding unit except for the embedded block; and
      decoding the coding unit and obtaining a residual signal of the remaining block.

2. The method of claim 1, wherein the parameter information includes at least one of depth information, position information, and size information of the embedded block.

3. The method of claim 2, wherein the parameter information is included in at least one of a sequence parameter set, a picture parameter set, a slice header, a coding tree unit level, or a coding unit level.

4. An apparatus for decoding a video signal (200), comprising:

a processor (1300) configured to
obtain a split flag from the video signal, wherein the split flag indicates whether a coding unit is partitioned; and to decode the coding unit based on the split type information,
**characterized in that** the processor (1300) is further configured to obtain split type information of the coding unit from the video signal when the coding unit is partitioned according to the split flag,

wherein the split type information includes embedded block type information,
wherein the embedded block type information indicates that the coding unit includes an embedded block,
wherein the embedded block is a block which is not positioned at a square-partitioned location and a dyadic -partitioned location within the coding unit,
wherein the coding unit including the embedded block is a unit for coding based on which inter-prediction is carried out,
wherein the embedded block is further partitioned into four blocks through a quadtree decomposition within the coding unit, and
wherein a range of possible spatial coordinates of the embedded block is restricted within the coding unit;

obtain number information of embedded blocks for the coding unit; and
obtain parameter information of each embedded block based on the number information and obtain a residual signal of the embedded block,
decode the embedded block based on the parameter information;
generate a remaining block related to the embedded block, wherein the remaining block represents the coding unit except for the embedded block, and decode the coding unit and obtain a residual signal of the remaining block.

5. The apparatus of claim 4, wherein the parameter information includes at least one of depth information, position information, and size information of the embedded block.

6. The apparatus of claim 5, wherein the parameter information is included in at least one of a sequence parameter set, a picture parameter set, a slice header, a coding tree unit level, or a coding unit level.

**Patentansprüche**

1. Verfahren zum Dekodieren eines Videosignals, aufweisend:

Erhalten (S510; S610) eines Split-Flags aus dem Videosignal, wobei das Split-Flag anzeigt, ob eine Kodiereinheit partitioniert ist;
Erhalten (S520; S620) von Split-Typ-Information der Kodiereinheit, wenn die Kodiereinheit gemäß dem Split-Flag partitioniert ist; und
Dekodieren (S530; S660) der Kodiereinheit auf der Grundlage der Split-Typ-Information der Kodiereinheit,
**dadurch gekennzeichnet, dass**
die Split-Typ-Information eingebetteter-Block-Typ-Information enthält,

wobei die eingebetteter-Block-Typ-Information anzeigt, dass die Kodiereinheit einen eingebetteten Block enthält,
wobei die Kodiereinheit, die den eingebetteten Block enthält, eine Einheit zur Kodierung ist, auf deren Grundlage die Inter-Vorhersage ausgeführt wird,
wobei der eingebettete Block ein Block ist, der nicht an einer quadratisch unterteilten Stelle und einer dyadisch unterteilten Stelle innerhalb der Kodiereinheit positioniert ist,
wobei der eingebettete Block durch eine Quadtree-Zerlegung weiter in vier Blöcke aufgeteilt ist, und
wobei ein Bereich von möglichen räumlichen Koordinaten des eingebetteten Blocks innerhalb der Kodiereinheit eingeschränkt ist; und

das Dekodieren ferner aufweist

Erhalten (S640) von Nummer-Information der eingebetteten Blöcke der Kodiereinheit;

Erhalten (S650) von Parameter-Information jedes eingebetteten Blocks auf der Grundlage der Nummer-Information und Erhalten eines Restsignals des eingebetteten Blocks; und

Dekodieren (S660) des eingebetteten Blocks auf der Grundlage der Parameter-Information;

Erzeugen eines verbleibenden Blocks, der sich auf den eingebetteten Block bezieht, wobei der verbleibende Block die Kodiereinheit mit Ausnahme des eingebetteten Blocks darstellt; und

Dekodieren der Kodiereinheit und Erhalt eines Restsignals des verbleibenden Blocks.

2. Verfahren nach Anspruch 1, wobei die Parameter-Information mindestens eine der folgenden Information enthält: Tiefeninformation, Positionsinformation und Größeninformation des eingebetteten Blocks.

3. Verfahren nach Anspruch 2, bei dem die Parameter-Information in mindestens einem von: einem Sequenzparametersatz, einem Bildparametersatz, einem Slice-Header, einer Kodierungsbaumeinheitsebene oder einer Kodierungseinheitsebene enthalten ist.

4. Vorrichtung zum Dekodieren eines Videosignals (200), aufweisend:

einen Prozessor (1300), dazu ausgebildet ist, um

ein Split-Flag aus dem Videosignal zu erhalten, wobei das Split-Flag anzeigt, ob eine Kodiereinheit partitioniert ist; und

die Kodiereinheit auf der Grundlage der Split-Typ-Information zu dekodieren,

**dadurch gekennzeichnet, dass** der Prozessor (1300) weiter dazu ausgebildet ist, um

die Split-Typ-Information der Kodiereinheit aus dem Videosignal zu erhalten,

wenn die Kodiereinheit gemäß dem Split-Flag partitioniert ist,

wobei die Split-Typ-Information eingebetteter-Block-Typ-Information enthält,

wobei die eingebetteter-Block-Typ-Information anzeigt, dass die Kodiereinheit einen eingebetteten Block enthält,

wobei der eingebettete Block ein Block ist, der nicht an einer quadratisch unterteilten Stelle und einer dyadisch unterteilten Stelle innerhalb der Kodiereinheit positioniert ist,

wobei die Kodiereinheit, die den eingebetteten Block enthält, eine Einheit zur Kodierung ist, auf deren Grundlage die Inter-Vorhersage ausgeführt wird,

wobei der eingebettete Block durch eine Quadtree-Zerlegung innerhalb der Kodiereinheit weiter in vier Blöcke aufgeteilt ist, und

wobei ein Bereich von möglichen räumlichen Koordinaten des eingebetteten Blocks innerhalb der Kodiereinheit eingeschränkt ist;

Nummer-Information der eingebetteten Blöcke der Kodiereinheit zu erhalten; und

die Parameter-Information jedes eingebetteten Blocks auf der Grundlage der Nummer-Information zu erhalten und ein Restsignal des eingebetteten Blocks zu erhalten,

den eingebetteten Block auf der Grundlage der Parameter-Information zu dekodieren;

einen verbleibenden Block zu erzeugen, der sich auf den eingebetteten Block bezieht, wobei der verbleibende Block die Kodiereinheit mit Ausnahme des eingebetteten Blocks darstellt, und

die Kodiereinheit zu dekodieren und ein Restsignal des verbleibenden Blocks zu erhalten.

5. Vorrichtung nach Anspruch 4, wobei die Parameter-Information mindestens eine der folgenden Information enthält: Tiefeninformation, Positionsinformation und Größeninformation des eingebetteten Blocks.

6. Vorrichtung nach Anspruch 5, wobei die Parameter-Information in mindestens einem von einem Sequenzparametersatz, einem Bildparametersatz, einem Slice-Header, einer Kodierungsbaumeinheitsebene oder einer Kodierungseinheitsebene enthalten ist.

**Revendications**

1. Procédé de décodage d'un signal vidéo, comprenant :

(S510 ; S610) l'obtention d'un indicateur de division à partir du signal vidéo, dans lequel l'indicateur de division indique si une unité de codage est partitionnée ;

(S520 ; S620) l'obtention d'informations de type divisé de l'unité de codage lorsque l'unité de codage est partitionnée conformément à l'indicateur de division ; et

(S530 ; S660) le décodage de l'unité de codage sur la base des informations de type divisé de l'unité de codage, **caractérisé en ce que**

les informations de type divisé incluent des informations de type de bloc intégré,

dans lequel les informations de type de bloc intégré indiquent que l'unité de codage inclut un bloc intégré,

dans lequel l'unité de codage incluant le bloc intégré est une unité de codage sur la base de laquelle l'inter-prédiction est effectuée,

dans lequel le bloc intégré est un bloc qui n'est pas positionné à un emplacement à partition carrée et un emplacement à partition dyadique dans l'unité de codage,

dans lequel le bloc intégré est en outre partitionné en quatre blocs par une décomposition par quadripartition, et

dans lequel une plage de coordonnées spatiales possibles du bloc intégré est restreinte à l'intérieur de l'unité de codage ; et

le décodage comprend en outre

(S640) l'obtention d'informations sur le nombre de blocs intégrés pour l'unité de codage ;

(S650) l'obtention d'informations de paramètres de chaque bloc intégré sur la base des informations sur le nombre et l'obtention d'un signal résiduel du bloc intégré ; et

(S660) le décodage du bloc intégré sur la base des informations de paramètres ;

la génération d'un bloc restant lié au bloc intégré, dans lequel le bloc restant représente l'unité de codage à l'exception du bloc intégré ; et

le décodage de l'unité de codage et l'obtention d'un signal résiduel du bloc restant.

2. Procédé selon la revendication 1, dans lequel les informations de paramètres incluent au moins un élément parmi les informations de profondeur, les informations de position et les informations de taille du bloc intégré.

3. Procédé selon la revendication 2, dans lequel les informations de paramètres sont incluses dans au moins un élément parmi un ensemble de paramètres de séquence, un ensemble de paramètres d'image, un en-tête de tranche, un niveau d'unité d'arbre de codage ou un niveau d'unité de codage.

4. Appareil pour décoder un signal vidéo (200), comprenant :

un processeur (1300) configuré pour

obtenir un indicateur de division à partir du signal vidéo, dans lequel l'indicateur de division indique si une unité de codage est partitionnée ; et

décoder l'unité de codage sur la base des informations de type divisé,

**caractérisé en ce que** le processeur (1300) est en outre configuré pour obtenir des informations de type divisé de l'unité de codage à partir du signal vidéo lorsque l'unité de codage est partitionnée selon l'indicateur de division,

dans lequel les informations de type divisé incluent des informations de type bloc intégré,

dans lequel les informations de type de bloc intégré indiquent que l'unité de codage inclut un bloc intégré,

dans lequel le bloc intégré est un bloc qui n'est pas positionné à un emplacement à partition carrée et un emplacement à partition dyadique dans l'unité de codage,

dans lequel l'unité de codage incluant le bloc intégré est une unité de codage sur la base de laquelle l'inter-prédiction est effectuée,

dans lequel le bloc intégré est en outre partitionné en quatre blocs par une décomposition par quadripartition à l'intérieur de l'unité de codage, et

dans lequel une plage de coordonnées spatiales possibles du bloc intégré est restreinte à l'intérieur de l'unité de codage ;

obtenir des informations sur le nombre de blocs intégrés pour l'unité de codage ; et

obtenir des informations de paramètres de chaque bloc intégré sur la base des informations sur le nombre et obtenir un signal résiduel du bloc intégré,

décoder le bloc intégré sur la base des informations de paramètres ;

générer un bloc restant lié au bloc intégré, dans lequel le bloc restant représente l'unité de codage à l'exception du bloc intégré, et

décoder l'unité de codage et obtenir un signal résiduel du bloc restant.

**5.** Appareil selon la revendication 4, dans lequel les informations de paramètre incluent au moins un élément parmi les informations de profondeur, les informations de position et les informations de taille du bloc intégré.

**6.** Appareil selon la revendication 5, dans lequel les informations de paramètre sont incluses dans au moins un élément parmi un ensemble de paramètres de séquence, un ensemble de paramètres d'image, un en-tête de tranche, un niveau d'unité d'arbre de codage, ou un niveau d'unité de codage.

【Figure 1】

【Figure 2】

【Figure 3】

(a)

(b)

【Figure 4】

CTU

【Figure 5】

```
                    ┌─────────┐
                    │  Start  │
                    └─────────┘
                         │
                         ▼
   ┌──────────────────────────────────────┐
   │   Obtain split flag from video signal │──── S510
   └──────────────────────────────────────┘
                         │
                         ▼
   ┌──────────────────────────────────────┐
   │     Obtain split type information     │──── S520
   └──────────────────────────────────────┘
                         │
                         ▼
   ┌──────────────────────────────────────┐
   │  Decode coding unit based on split type │──── S530
   │              information               │
   └──────────────────────────────────────┘
                         │
                         ▼
                    ┌─────────┐
                    │   End   │
                    └─────────┘
```

【Figure 6】

```
                          ┌──────────┐
                          │  Start   │
                          └────┬─────┘
                               │
                               ▼
         No          ◇ IS Coding unit(CU) ◇ ──── S610
      ◄──────────────◇   partitioned?   ◇
                               │
                              Yes
                               ▼
              ┌───────────────────────────────┐
              │ Obtain split type information  │──── S620
              └───────────────┬───────────────┘
                               │
                               ▼
         No          ◇  split type= embedded ◇ ──── S630
      ◄──────────────◇   block(EB) ?       ◇
                               │
                              Yes
                               ▼
              ┌───────────────────────────────┐
              │ Obtain number information of EB│──── S640
              └───────────────┬───────────────┘
                               │
                               ▼
              ┌───────────────────────────────┐
              │For each EB, obtain parameter information│──── S650
              └───────────────┬───────────────┘
                               │
                               ▼
              ┌───────────────────────────────┐
              │Decode EB based on parameter information│──── S660
              └───────────────┬───────────────┘
                               │
                               ▼
                          ┌──────────┐
                          │   End    │
                          └──────────┘
```

【Figure 7】

```
                    ┌─────────────┐
                    (   Start     )
                    └──────┬──────┘
                           │
                           ▼
   ┌──────────────────────────────────────────┐
   │   Decode embedded block(EB) and obtain    │──── S710
   │         residual signal of EB             │
   └──────────────────┬───────────────────────┘
                      │
                      ▼
   ┌──────────────────────────────────────────┐
   │         Decode current coding unit         │──── S720
   └──────────────────┬───────────────────────┘
                      │
                      ▼
   ┌──────────────────────────────────────────┐
   │  Obtain residual signal of remaining block(RB), │──── S730
   │   which has excluded EB from coding unit   │
   └──────────────────┬───────────────────────┘
                      │
                      ▼
   ┌──────────────────────────────────────────┐
   │   Decode residual signals with transform   │──── S740
   │               quadtree                     │
   └──────────────────┬───────────────────────┘
                      │
                      ▼
                ┌──────────┐
                (   End     )
                └──────────┘
```

【Figure 8】

```
                        ╭─────────╮
                        │  Start  │
                        ╰─────────╯
                             │
                             ▼
        ┌─────────────────────────────────────────┐
        │  Decode embedded block(EB) and obtain    │──── S810
        │          residual signal of EB           │
        └─────────────────────────────────────────┘
                             │
                             ▼
        ┌─────────────────────────────────────────┐
        │  Decode current coding unit including EB and  │──── S820
        │  obtain residual signal of current coding unit │
        └─────────────────────────────────────────┘
                             │
                             ▼
        ┌─────────────────────────────────────────┐
        │  Apply predefined weight information to each of │──── S830
        │            residual signals              │
        └─────────────────────────────────────────┘
                             │
                             ▼
        ┌─────────────────────────────────────────┐
        │  Decode residual signals with transform quadtree │──── S840
        └─────────────────────────────────────────┘
                             │
                             ▼
                        ╭─────────╮
                        │   End   │
                        ╰─────────╯
```

[Figure 9]

| S901 | coding_tree_unit( ) |
| | { |
| S902 | split_cu_flag |
| S903 | if (split_cu_flag) |
| S904 | split_type_id |
| S905 | If (split_type_id != EBP_TYPE) |
| S906 | coding_unit( x0, y0, log2CbSize) |
| S907 | else |
| S908 | number_ebp |
| S909 | loop_over number_ ebp |
| | { |
| S910 | log2_dif_max_ ebp [i] |
| S911 | conditional_location _ebp _y[i] |
| S912 | conditional_location _ebp _x[i] |
| S913 | other_param_ebp() |
| S914 | coding_unit(conditional_location_ebp _x[i], conditional_location_ebp _y[i], log2_dif_max_ebp + log2_min_luma_coding_block_size_minus3+3) |
| | } |
| S915 | coding_unit( x0, y0, log2CbSize, type_decomp ) |
| | } |

【Figure 10】

CU

【Figure 11】

```
            ┌─────────┐
            │  Start  │
            └─────────┘
                 │
                 ▼
┌───────────────────────────────────────┐
│   Perform full quadtree decomposition  │ ───S1110
│              for coding unit           │
└───────────────────────────────────────┘
                 │
                 ▼
┌───────────────────────────────────────┐
│ Aggregate motion information of        │ ───S1120
│ partition blocks                       │
└───────────────────────────────────────┘
                 │
                 ▼
┌───────────────────────────────────────┐
│ Generate embedded block(EB) by merging │ ───S1130
│ partition blocks which have the same   │
│ motion pattern                         │
└───────────────────────────────────────┘
                 │
                 ▼
            ┌─────────┐
            │   End   │
            └─────────┘
```

【Figure 12】

```
                    ┌──────────┐
                    (   Start   )
                    └──────────┘
                          │
                          ▼
┌────────────────────────────────────────────────────┐
│   Calculate 1st RD cost of embeded block(EB)         │──── S1210
│     and 2nd RD cost of remaining block(RB)           │
└────────────────────────────────────────────────────┘
                          │
                          ▼
┌────────────────────────────────────────────────────┐
│ Determine the number of EB to optimize function,which│──── S1220
│  is based on summation of 1st RD cost and 2nd RD cost│
└────────────────────────────────────────────────────┘
                          │
                          ▼
┌────────────────────────────────────────────────────┐
│              Encode coding unit                      │──── S1230
└────────────────────────────────────────────────────┘
                          │
                          ▼
                    ┌──────────┐
                    (   End     )
                    └──────────┘
```

【Figure 13】

processor (1300)

EB decoding unit (1330)

EB parameter obtaining unit (1331)

EB residual obtaining unit (1332)

CU decoding unit (1340)

Split type obtaining unit (1320)

Split flag obtaining unit (1310)

**REFERENCES CITED IN THE DESCRIPTION**

**Non-patent literature cited in the description**

• **HER-HSIUNG CHANG ; LONG WEN CHANG.** Edge-based motion estimation and region-based contour tracing for very low bit rate video coding. *Journal of Electronic Imaging,* January 1998, vol. 7 (1), 127-135